# FASCICULE DE BREVET EUROPEEN

(11) **EP 3 809 917 B1**
(45) Date de publication et mention de la délivrance du brevet: **06.12.2023**
(21) Numéro de dépôt: 19742430.2
(22) Date de dépôt: 14.05.2019
(51) Int. Cl.: A46B 3/06, A46B 5/00, A46B 9/04, A46D 3/00, A46D 3/04, A61C 17/22

(54) **PROCÉDÉ DE FABRICATION D'UNE PIÈCE DE BROSSAGE DENTAIRE, ET PIÈCE DE BROSSAGE DENTAIRE**
VERFAHREN ZUR HERSTELLUNG EINES ZAHNBÜRSTENTEILS SOWIE ZAHNBÜRSTENTEIL
METHOD FOR MANUFACTURING A DENTAL BRUSHING PART, AND DENTAL BRUSHING PART

(30) Priorité: 22.05.2018 FR 1854219
(43) Date de publication de la demande: 28.04.2021
(73) Titulaire: Fasteesh, 69005 Lyon (FR)
(72) Inventeur: CADOT, Christophe, 69005 Lyon (FR); COHEN, Benjamin, 69008 Lyon (FR)
(74) Mandataire: Germain Maureau
(86) Numéro de dépôt international: PCT/FR2019/051081
(87) Numéro de publication internationale: WO 2019/224450

(56) Documents cités:
- US-A- 4 635 313
- US-A1- 2011 225 758
- US-A1- 2014 272 761

## Description

La présente invention concerne le domaine des équipements de nettoyage dentaire.

Le brossage dentaire est une tache nécessaire à une bonne hygiène bucco-dentaire, mais c'est une tâche ressentie comme fastidieuse, et de ce fait souvent mal effectuée. Pour faciliter le brossage et garantir de meilleurs gestes, il est bien connu de recourir à des brosses à dents électriques, dont les têtes sont mises en mouvement par des moteurs. Cependant, avec une telle brosse, un bon geste de brossage reste nécessaire, et exige un minimum de dextérité et d'autonomie. En outre, le temps nécessaire pour un bon brossage, généralement 2 ou 3 minutes, est souvent vécu comme trop long. D'autre part, pour certaines populations spécifiques, comme les personnes âgées, dépendantes, en perte d'autonomie, ou encore les enfants une telle brosse n'est ainsi pas toujours adaptée. Afin de remédier à ces problèmes, il a été proposé un dispositif comprenant une pièce de brossage sensiblement en forme de U, configurée pour être placée sur la dentition d'un utilisateur, formant intérieurement une gouttière destinée à recevoir la totalité ou une partie de la dentition d'une mâchoire d'un utilisateur; la gouttière ainsi formée, doit être habillée de poils destinés au brossage de la dentition, agencés sur les parois intérieures de la gouttière de manière à assurer un brossage le plus efficace possible. Le document US2014/272761 A1 divulgue une pièce de brossage en forme de U.

Les procédés connus pour l'insertion de poils de brossage sur les équipements de nettoyage dentaire habituels, tels que par exemple des brosses à dents manuelles ou électriques, ne sont pas adaptés pour obtenir une configuration de brossage efficace lorsqu'ils sont appliqués sur les parois intérieures de la gouttière en forme de U d'une pièce de brossage configurée pour épouser dans son ensemble la forme de tout ou partie de la dentition à nettoyer. Les procédés connus ne permettent notamment pas de fixer des poils ultrafins et courts, dans une pièce de brossage qui doit être souple, fine et de géométrie complexe. Avec les procédés connus, les poils de brossage sont fixés sur une paroi de géométrie simple, tel qu'une surface sensiblement plane par exemple, l'inclinaison des poils relativement à la surface ne variant pas de plus de 15 degrés environ. Le document US4635313 A divulgue un procédé de fabrication d'une brosse à dents.

L'invention a donc pour but de proposer une solution à tout ou partie de ces problèmes.

A cet effet, la présente invention concerne un procédé de fabrication d'une pièce de brossage, la pièce de brossage étant configurée en forme de U pour être placée sur la dentition d'une mâchoire d'un utilisateur, la pièce de brossage formant intérieurement une gouttière destinée à recevoir la totalité ou une partie de cette dentition, la pièce de brossage comprenant au moins une touffe de poils de brossage faisant saillie à l'intérieur de cette gouttière par une extrémité libre des poils de l'au moins une touffe, le procédé comprenant les étapes suivantes :
- former l'au moins une touffe de poils, en assemblant une pluralité de poils par une extrémité opposée à l'extrémité libre, de manière à former une base de l'au moins une touffe;
- fusionner les extrémités formant la base de l'au moins une touffe de manière à former une zone fusionnée d'un seul tenant, de sorte qu' une extension de la zone fusionnée selon une direction transversale à une direction d'extension de l'au moins une touffe soit supérieure à une extension de la base selon la direction transversale avant l'étape de fusionnement ;
- mettre en place l'au moins une touffe sur un moule de surmoulage de la gouttière de la pièce de brossage ;
- surmouler la gouttière et l'au moins une touffe; dans lequel l'étape de surmoulage comprend une sous-étape d'injection d'un matériau plastique souple, de sorte que la zone fusionnée de l'au moins une touffe est à l'intérieur, et non pas à la surface, d'une paroi de la gouttière et prise dans le matériau plastique souple formant la gouttière, et de sorte que l'autre extrémité de l'au moins une touffe opposée à la zone fusionnée fait saillie à l'intérieur de la gouttière formée par l'étape de surmoulage.

Le procédé selon l'invention peut en outre présenter une ou plusieurs des caractéristiques suivantes, prises seules ou en combinaison.

Selon un mode de réalisation, l'étape de fusionnement comprend une sous-étape de chauffage des extrémités formant la base de l'au moins une touffe.

Selon un mode de réalisation, l'étape de fusionnement est réalisée avant l'étape de mise en place afin de disposer de la place nécessaire à la réalisation de cette étape de fusionnement, l'étape de fusionnement étant réalisée avec un outillage différent de celui utilisé pour l'étape de mise en place de l'au moins une touffe sur le moule de surmoulage.

Selon l'invention, l'étape de surmoulage comprend une sous-étape d'injection d'un matériau plastique souple, de sorte que la zone fusionnée de l'au moins une touffe est à l'intérieur , et non pas à la surface, d'une paroi de la gouttière et prise dans le matériau plastique souple formant la gouttière, et de sorte que l'autre extrémité de l'au moins une touffe opposée à la zone fusionnée fait saillie à l'intérieur de la gouttière formée par l'étape de surmoulage.

Selon un mode de réalisation, la souplesse du matériau injecté au cours de la sous-étape d'injection est comprise avantageusement entre 10 shore A et 100 shore A, par exemple entre 50 et 70 shore A.

Grâce à ces dispositions, des poils ultrafins et courts peuvent être fixés et solidement maintenus, avec des inclinaisons variables, sur la paroi d'une gouttière de la pièce de brossage en matériau souple, ladite paroi pouvant être fine et de géométrie complexe.

Selon un mode de réalisation, une épaisseur d'une paroi de la gouttière formée par la pièce de brossage est inférieure à 3 mm, de préférence inférieure à 2,5 mm, de préférence encore inférieure à 1 mm .

Selon un mode de réalisation, le moule de surmoulage comprend au moins un trou sur une face du moule, ledit au moins un trou comprenant une ouverture d'entrée dont le diamètre intérieur se réduit progressivement entre une section d'entrée et une section de sortie présentant un diamètre moindre qu'un diamètre de la section d'entrée et dans lequel l'étape de mise en place comprend une sous-étape d'insertion, dans l'au moins un trou, de l'extrémité libre des poils de l'au moins une touffe, en pénétrant par l'ouverture d'entrée, jusqu'à ce que l'extrémité, après avoir traversé la section de sortie de l'ouverture d'entrée de l'au moins un trou, se trouve au contact du fond de l'au moins un trou, la section de sortie de l'ouverture d'entrée étant alors obstruée par une portion de la touffe, de manière à fermer et rendre étanche la section de sortie de l'ouverture d'entrée de l'au moins un trou.

Grâce à ces dispositions, l'ouverture en forme d'entonnoir du trou facilite l'insertion de l'extrémité de la touffe en guidant l'extrémité libre des poils.

Selon un mode de réalisation, l'étape de mise en place de la touffe peut être manuelle ou automatisée.

Selon un mode de réalisation, l'étape de mise en place de l'au moins une touffe rend étanche la section de sortie de l'ouverture d'entrée du trou du moule, de sorte que le matériau plastique souple injecté au cours de l'étape de surmoulage pour former la pièce de brossage n'atteint pas l'extrémité libre de l'au moins une touffe qui fait saillie à l'intérieur de la gouttière.

Selon un mode de réalisation, la zone fusionnée de l'au moins une touffe est entre la section d'entrée et la section de sortie de l'ouverture d'entrée de l'au moins un trou sur la face du moule de surmoulage; plus précisément, la zone fusionnée est située à une distance de la section de sortie d'au moins 0,5 mm, de sorte que la zone fusionnée est située finalement à l'intérieur, et non pas à la surface, de la paroi de la pièce de brossage. Selon ces dispositions, l'étanchéité est assurée par les poils de la touffe, et non par la zone fusionnée.

Selon un mode de réalisation, le procédé comprend l'étape complémentaire suivante :
- mettre en forme l'extrémité libre des poils de la pluralité de poils de l'au moins une touffe.

Selon un mode de réalisation chaque poil de la pluralité de poils est un filament.

Selon un mode de réalisation, l'étape de mise en forme de l'extrémité libre des poils consiste à donner une forme arrondie, ou une forme d'aiguille à l'extrémité libre de chaque filament de la pluralité de poils.

Selon un mode de réalisation, les extrémités libres des poils de la touffe de poils sont dans un plan transverse, ou dans un plan non transverse, à la direction d'extension de la touffe de poils. Selon ces dispositions, l'extrémité libre de l'au moins une touffe est parallèle, ou pas, à un plan d'extension de la zone fusionnée.

Selon un mode de réalisation, l'étape de mise en forme de l'extrémité libre des poils est réalisée avant l'étape de mise en place afin de disposer de la place nécessaire à la réalisation de cette étape.

Selon un mode de réalisation, l'étape de mise en forme de l'extrémité libre des poils peut être réalisée avant les étapes de mise en place de la touffe et de surmoulage, pour faciliter cette mise en forme, qui serait rendue très difficile après la mise en place des touffes et le surmoulage de la gouttière, du fait du faible volume à l'intérieur de la gouttière disponible pour effectuer cette opération de mise en forme.

Selon un mode de réalisation, l'étape de mise en forme de l'extrémité libre des poils permet d'améliorer l'efficacité du brossage par la pièce de brossage.

Selon un mode de réalisation, le matériau plastique souple injecté au cours de l'étape de surmoulage est chimiquement compatible du matériau dans lequel les poils sont réalisés.

Selon un mode de réalisation, les poils sont en nylon, ou en soie animale, ou en polybutylene terephtalate.

Selon un mode de réalisation, le matériau plastique souple est un matériau thermoplastique élastomère, de préférence un Styrene-Ethylene-Butylene-Styrene.

La compatibilité chimique de deux matériaux signifie que lorsque ces matériaux sont au contact l'un de l'autre dans des conditions adaptées, ils réagissent chimiquement de façon à adhérer fortement l'un à l'autre, comme s'ils étaient collés.

Ainsi, selon un mode de réalisation, les matériaux chimiquement compatibles utilisés sont d'une part tous les matériaux de la famille des thermoplastiques élastomères, de préférence le Styrene-Ethylene-Butylene-Styrene, pour la réalisation du surmoulage de la pièce de brossage, avec d'autre part tous les matériaux de la famille des polyamides, de préférence le Nylon, par exemple le nylon 612, pour la réalisation des poils de brossage.

Selon un mode de réalisation, les matériaux chimiquement compatibles utilisés sont d'une part tous les matériaux de la famille des silicones, pour la réalisation du surmoulage de la pièce de brossage, avec d'autre part tous les matériaux de la famille des polyamides, de préférence le Nylon, par exemple le nylon 612, pour la réalisation des poils de brossage.

L'homme du métier saura déterminer parmi les matériaux des familles précitées ceux qui sont les plus adaptés à l'utilisation visée ici.

Selon un mode de réalisation, les touffes sont maintenues dans la paroi de la gouttière de la pièce de brossage, non seulement mécaniquement par la présence de la zone fusionnée à l'intérieur de la paroi, mais également par l'adhésion chimique des matériaux de la zone fusionnée et de la paroi de la gouttière. Ainsi, la compatibilité chimique des matériaux de la zone fusionnée et de la paroi de la gouttière améliore l'accroche de la touffe sur la gouttière. Cette accroche est encore améliorée par l'élargissement de la surface de la zone fusionnée formée à la base de la touffe et prise à l'intérieur de la paroi de la gouttière, qui offre de ce fait une meilleure résistance à l'arrachement, et permet ainsi de résister à une force d'au moins 15 Newton.

Selon un mode de réalisation, les poils ont un diamètre compris entre 60 et 120 µm, de préférence égal à 80 µm.

Selon un mode de réalisation, les poils ont une longueur inférieure à 8 mm, de préférence égale à 7,5 mm.

Grâce à ces dispositions, les poils ont des dimensions compatibles des dimensions internes de la pièce de brossage et sont configurés pour brosser efficacement les dents positionnées à l'intérieur de la gouttière.

Selon un mode de réalisation, l'au moins une touffe est mise en place de façon à ce que la direction d'extension de l'au moins une touffe fasse un angle de 45 degrés avec une direction perpendiculaire à une face de la gouttière au point où l'au moins une touffe fait saillie sur la face de la gouttière.

Selon un mode de réalisation, l'au moins une touffe comprend au moins deux touffes mises en place de façon à ce que la direction d'extension d'une des au moins deux touffes fasse un angle de 90 degrés avec la direction d'extension d'une autre des au moins deux touffes.

Grâce à ces dispositions, les touffes de poils sont agencées pour brosser efficacement les dents positionnées à l'intérieur de la gouttière.

Selon un mode de réalisation, l'étape de surmoulage est précédée de l'étape suivante :
- Positionner contre le moule de la pièce de brossage au moins une branche située à une extrémité d'un connecteur, ladite au moins une branche étant configurée pour être à l'intérieur d'une paroi de la gouttière et prise dans le matériau de la gouttière après l'étape de surmoulage, et pour transmettre à la pièce de brossage les vibrations générées par un manche de préhension vibrant branché sur une autre extrémité du connecteur.

Grâce à ces dispositions, la pièce de brossage peut être actionnée par un moyen autonome pour assurer un brossage efficace de la dentition d'un enfant ou d'une personne dépendante et en perte d'autonomie.

Selon un mode de réalisation, l'invention concerne également une pièce de brossage configurée en forme de U pour être placée sur la dentition d'une mâchoire d'un utilisateur, la pièce de brossage formant intérieurement une gouttière destinée à recevoir la totalité ou une partie de cette dentition, la pièce de brossage comprenant au moins une touffe de poils de brossage faisant saillie à l'intérieur de cette gouttière par une extrémité libre des poils de l'au moins une touffe,
- l'au moins une touffe de poils, comprenant une pluralité de poils assemblés par une extrémité, opposée à l'extrémité libre, de manière à former une base de l'au moins une touffe;
- la base de l'au moins une touffe formant une zone fusionnée d'un seul tenant, une extension de la zone fusionnée selon une direction transversale à une direction d'extension de l'au moins une touffe étant supérieure à une extension de la base selon la direction transversale avant la formation de la zone fusionnée;
- la zone fusionnée de l'au moins une touffe étant à l'intérieur, et non pas à la surface, d'une paroi de la gouttière et prise dans un matériau plastique souple formant la gouttière, et l'autre extrémité de l'au moins une touffe opposée à la zone fusionnée faisant saillie à l'intérieur de la gouttière formée par la pièce de brossage.

Selon un mode de réalisation, les poils sont en nylon ou en soie animale ou en polybutylene terephtalate.

Selon un mode de réalisation, le matériau plastique souple est un matériau thermoplastique élastomère, de préférence un Styrene-Ethylene-Butylene-Styrene.

Selon un mode de réalisation, l'extrémité libre des poils peut être arrondie, ou en forme d'aiguille.

Grâce à ces dispositions, la compatibilité chimique est assurée entre le matériau constituant la zone fusionnée de la touffe, et le matériau de la pièce de brossage, de sorte que l'adhésion mutuelle de ces deux matériaux est maximale et que les touffes sont maintenues dans la pièce de brossage non seulement mécaniquement par la présence de la zone fusionnée, mais également par l'adhésion chimique des matériaux de la zone fusionnée d'une part et de la pièce de brossage d'autre part.

Selon un mode de réalisation, les poils ont un diamètre compris entre 60 µm et 120 µm, de préférence égal à 80 µm.

Selon un mode de réalisation, les poils ont une longueur inférieure à 8 mm, de préférence égale à 7,5 mm.

Grâce à ces dispositions, les poils ont des dimensions compatibles des dimensions internes de la pièce de brossage et sont configurés pour brosser efficacement les dents positionnées à l'intérieur de la gouttière.

Selon un mode de réalisation, la direction d'extension de l'au moins une touffe fait un angle de 45 degrés avec une direction perpendiculaire à une face de la gouttière au point où l'au moins une touffe fait saillie sur la face de la gouttière.

Selon un mode de réalisation, l'au moins une touffe comprend au moins deux touffes, la direction d'extension d'une des au moins deux touffes faisant un angle de 90 degrés avec la direction d'extension d'une autre des au moins deux touffes.

Selon un mode de réalisation, l'au moins une touffe comprend une pluralité de touffes, et la pluralité de touffes est répartie en quinconce sur la face intérieure de la gouttière, de manière à maximiser la densité de poils localement et améliorer ainsi l'efficacité du brossage.

Ainsi, selon un mode de réalisation du procédé selon l'invention, les trous sont répartis en quinconce sur le moule de surmoulage.

Selon un mode de réalisation, la paroi de la gouttière comprend une portion intérieure de la paroi, configurée pour se trouver au contact d'une langue d'un utilisateur de la pièce de brossage, et une portion extérieure de la paroi qui fait face à la portion intérieure de la paroi, en étant séparée de celle-ci par une distance variable; au moins une partie de la portion intérieure de la paroi, ladite au moins une partie étant située à une extrémité d'une branche du U formé par la pièce de brossage, présente une hauteur plus faible vers l'extrémité de la branche du U que la hauteur d'une partie correspondante de la portion extérieure de la paroi, ladite partie correspondante étant située sensiblement en face de l'au moins une partie de la portion intérieure de la paroi ; ceci a pour effet de laisser une marge de manoeuvre plus importante pour le positionnement de la langue, et ainsi d'éviter un réflexe nauséeux chez certaines personnes.

Selon un mode de réalisation, une partie de la portion intérieure de la paroi intérieure de la gouttière, ladite partie étant située entre les deux branches du U formé par la pièce de brossage, présente une hauteur plus faible que la hauteur d'une partie correspondante de la portion extérieure de la paroi, ladite partie correspondante étant située sensiblement en face de l'au moins une partie de la portion intérieure de la paroi ; ainsi, lorsque la pièce de brossage est destinée à être utilisée sur une arcade supérieure, cette disposition permet d'éviter que la pièce ne s'appuie sur le palais qui est une zone sensible.

Selon un mode de réalisation, une partie de la portion extérieure de la paroi de la gouttière est épaissie ; ceci permet de s'assurer que les poils viennent toucher la partie concernée de la dentition et de s'assurer ainsi que toutes les dents sont bien brossées.

Selon un mode de réalisation, la distance entre la portion intérieure de la paroi et la portion extérieure de la paroi est configurée pour assurer que toutes les dents sont au contact d'au moins une touffe.

Grâce à ces dispositions, les touffes de poils sont agencées pour brosser efficacement les dents positionnées à l'intérieur de la gouttière.

Selon un mode de réalisation, la pièce de brossage comprend au moins une branche fixée à une extrémité d'un connecteur, ladite au moins une branche étant configurée pour transmettre à la pièce de brossage des vibrations générées par un manche de préhension vibrant branché sur une autre extrémité du connecteur.

Selon un mode de réalisation, ladite au moins une branche est positionnée à l'intérieur de la paroi du fond de la, ou à l'intérieur de la paroi latérale, de la gouttière.

Selon un mode de réalisation, le matériau plastique souple injecté au cours de l'étape de surmoulage est chimiquement compatible avec le matériau dans lequel l'au moins une branche est réalisée. Grâce à ces dispositions, l'au moins une branche et la pièce de brossage adhèrent l'un à l'autre.

Ainsi, selon un mode de réalisation, les matériaux chimiquement compatibles utilisés sont d'une part tous les matériaux de la famille des thermoplastiques élastomères, de préférence le Styrene-Ethylene-Butylene-Styrene, pour la réalisation du surmoulage de la pièce de brossage, avec d'autre part, pour la réalisation de l'au moins une branche, tous les matériaux de la famille des polypropylènes, ou tous les matériaux de la famille des ABS (Acrylonitrile Butadiene Styrene), ou tous les matériaux de la famille des PU (polyuréthane), ou tous les matériaux de la famille des PC (polycarbonate), ou tous les matériaux de la famille des PA (polyamide), ou tous les matériaux de la famille des PE (polyéthylène).

Selon un mode de réalisation, les matériaux chimiquement compatibles utilisés sont d'une part tous les matériaux de la famille des silicones, pour la réalisation du surmoulage de la pièce de brossage, avec d'autre part, pour la réalisation de l'au moins une branche, tous les matériaux de la famille des polypropylènes, ou tous les matériaux de la famille des ABS (Acrylonitrile Butadiene Styrene), ou tous les matériaux de la famille des PU (polyuréthane), ou tous les matériaux de la famille des PC (polycarbonate), ou tous les matériaux de la famille des PA (polyamide), ou tous les matériaux de la famille des PE (polyéthylène).

L'homme du métier saura déterminer parmi les matériaux des familles précitées ceux qui sont les plus adaptés à l'utilisation visée ici.

Grâce à ces dispositions, la pièce de brossage peut être actionnée par un moyen autonome pour assurer un brossage efficace de la dentition d'un enfant ou d'une personne dépendante et en perte d'autonomie.

Selon un mode de réalisation, l'invention concerne également un pack comprenant :
- une pièce de brossage selon l'invention ;
- un manche de préhension, configuré pour être branché sur le connecteur de la pièce de brossage,
- un socle de rangement du manche de préhension, le socle de rangement étant configuré pour assurer une alimentation électrique du manche.

Pour sa bonne compréhension, l'invention est décrite en référence aux dessins ci-annexés représentant, à titre d'exemple non limitatif, une forme de réalisation d'un dispositif selon l'invention. Les mêmes références sur les dessins désignent des éléments similaires ou des éléments dont les fonctions sont similaires.
Figure 1 est une vue en coupe de la pièce de brossage.
Figure 2 est une vue en perspective de la pièce de brossage.
Figure 3 est une vue en coupe simplifiée de la gouttière de la pièce de brossage et de trois touffes de poils
Figure 4 est une représentation simplifiée d'une touffe de poils
Figure 5 est une représentation simplifiée d'un poil
Figure 6 est une vue de dessus d'un connecteur à deux branches
Figure 7 est une vue de dessus d'un connecteur monté sur une pièce de brossage
Figure 8 est une représentation schématique des étapes du procédé.
Figure 9 est une vue en perspective d'un exemple de moule en deux parties, avec une partie supérieure sur la figure 9a et une partie inférieure sur la figure 9b, configurées pour l'étape de surmoulage.
Figure 10 est une vue en coupe d'un trou du moule de surmoulage, avec une touffe insérée à l'intérieur du trou.

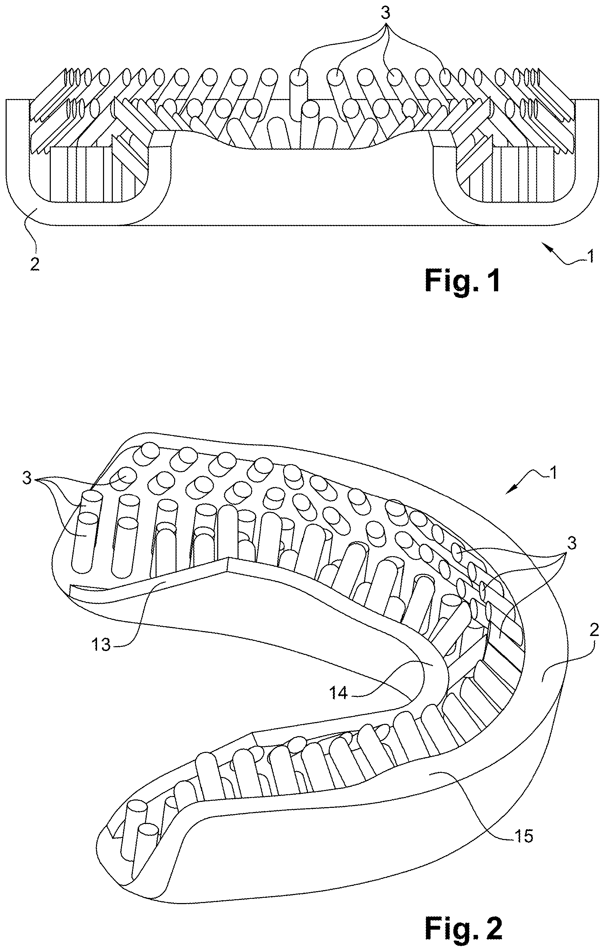

Les figures 1 et 2 illustrent, selon respectivement une vue en coupe et une vue en perspective, un mode de réalisation de la pièce de brossage 1, objet de l'invention selon un premier aspect.

Selon un mode de réalisation la pièce de brossage lest configurée en forme de U pour être placée sur la dentition d'une mâchoire d'un utilisateur. La pièce de brossage 1 comprend une partie 2 en forme de gouttière, destinée à recevoir la totalité ou une partie de cette dentition. Cette partie 2 sera appelée gouttière dans la suite de cette description. La pièce de brossage 1 comprend au moins une touffe 3 de poils 4, de préférence une pluralité de touffes 3 disposées et réparties sur les faces intérieures de la gouttière 2, les touffes faisant saillie à l'intérieur de cette gouttière 2

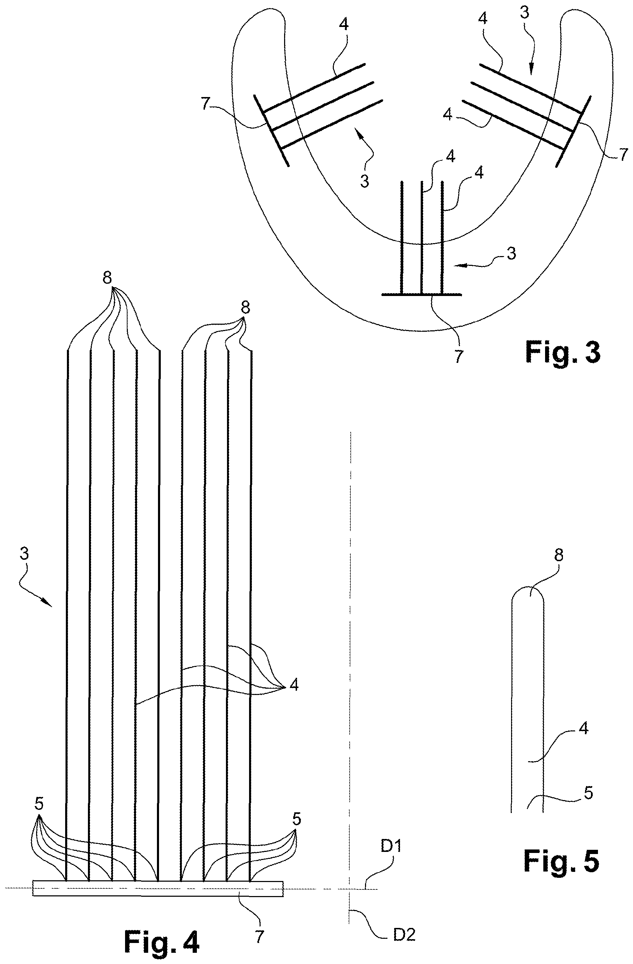

L'au moins une touffe 3 de poils 4, comprend une pluralité de poils 4 assemblés par une extrémité 5 de manière à former une base de l'au moins une touffe 3, comme cela est représenté sur les figures 3 et 4 de manière très simplifiée ; la base de l'au moins une touffe 3, comprenant l'ensemble formé par la juxtaposition d'une des extrémités 5 des poils assemblés en touffe 3, est fusionnée 7, par chauffage par exemple, de manière à former une zone fusionnée 7,ladite zone fusionnée étant constituée d'un seul tenant dans le matériau des poils 4. Le matériau des poils peut être en nylon, ou dans une soie animale, ou encore en polybutylene terephtalate (PBT) par exemple. Les poils 4 d'une touffe 3 ont une longueur de préférence inférieure à 8 mm, de préférence égale à 7,5 mm. Les poils sont de préférence des filaments sensiblement rectilignes, de préférence ultrafins, c'est-à-dire que le diamètre des filaments est compris entre 60 µm et 120 µm, de préférence 80 µm. Grâce à ces dispositions, les poils ont des dimensions compatibles des dimensions internes de la pièce de brossage et peuvent être agencés à l'intérieur de la gouttière 2 pour brosser efficacement les dents également placées à l'intérieur de la gouttière 2.

Chaque touffe 3 est plus longue, selon une direction d'extension D2, que large ou épaisse, selon une direction D1 transverse à la direction D2. L'extension selon la direction D1 de la base d'une touffe 3 avant le fusionnement des extrémités 5 des poils 4 formant la base de la touffe, est inférieure à l'extension selon la direction D1 de la zone fusionnée 7. La fusion du matériau des poils aux extrémités 5 provoque une dilatation de la base de la touffe 3, qui prend ainsi une forme de champignon renversé comme illustré sur les figures 3 et 4.

Les extrémités libres 8 des poils 4 d'une touffe 3 sont arrondies pour un brossage efficace et sans risque pour la gencive.

Les extrémités libres 8 des poils 4 d'une touffe 3 font saillie sur les faces intérieures de la paroi de la gouttière 2 de la pièce de brossage 1, tandis que la zone fusionnée 7 d'une touffe 3 est prise dans le matériau qui sert à former la paroi de la gouttière 2, à l'intérieur de cette paroi. Ainsi la touffe 3 est fermement maintenue dans et par la paroi de la gouttière 2.

Le matériau utilisé pour former la paroi de la gouttière 2 doit être un matériau plastique souple, afin de permettre un ajustement suffisant de la forme de la pièce de brossage 1 à la forme de la dentition de l'utilisateur de la pièce de brossage 1.

Afin d'améliorer le maintien de la touffe 3 on peut choisir un matériau plastique souple compatible chimiquement avec le matériau des poils 4 et de la zone fusionnée 7. Lorsque le matériau des poils 4 est du nylon, on choisira ainsi pour former la gouttière 2 un matériau compatible chimiquement avec le nylon, par exemple un matériau thermoplastique élastomère, de préférence un Styrene-Ethylene-Butylene-Styrene.

Ainsi, la compatibilité chimique étant assurée entre le matériau constituant la zone fusionnée de la touffe, et le matériau de la pièce de brossage, de sorte que l'adhésion mutuelle de ces deux matériaux est maximale et que les touffes sont maintenues dans la pièce de brossage non seulement mécaniquement par la présence de la zone fusionnée, mais également par l'adhésion chimique des matériaux de la zone fusionnée d'une part et de la pièce de brossage d'autre part. Grâce à ces dispositions, l'adhésion de la zone fusionnée 7 d'une touffe 3, dans la paroi de la gouttière 2 peut résister à une force de traction de 15 Newtons.

Afin d'améliorer l'efficacité du brossage, une pluralité de touffes 3 est répartie sur les faces intérieures de la paroi de la gouttière 2 ; comme illustré sur les figures 1 à 3, la direction d'extension D2 d'une touffe 3 a un inclinaison par rapport à la direction perpendiculaire à la face considérée au point où la touffe 3 fait saillie sur la face de la gouttière 2, qui peut varier entre 0 degrés, par exemple pour une touffe 3 plantée sur la face inférieure de la gouttière, et 45 degrés, par exemple, de préférence dirigée vers le haut de la gouttière, pour une touffe 3 plantée sur l'une des faces latérales de la gouttière 2. Ainsi la direction d'extension D2 d'une touffe 3 peut faire un angle de 90 degrés par exemple avec la direction d'extension D2 d'une autre touffe 3. Grâce à ces dispositions, les touffes de poils sont agencées pour brosser efficacement les dents positionnées à l'intérieur de la gouttière.

Selon un mode de réalisation de l'invention, la répartition des touffes de poils en saillies sur la face intérieure de la gouttière 2, est ajustée de manière à maximiser la densité de poils localement et améliorer ainsi l'efficacité du brossage. A cet effet, une répartition en quinconce des trous sur le moule de surmoulage est choisie.

Selon un mode de réalisation, la forme de la gouttière, et notamment la pente de la paroi intérieure de la gouttière, est ajustée, de manière à limiter un réflexe nauséeux lors de l'utilisation de la pièce de brossage, ou de manière à favoriser un bon contact des poils au niveau de certaines dents, les canines, les incisives ou les molaires par exemple.

Plus précisément, comme illustré sur la figure 2, la paroi de la gouttière 2 comprend une portion intérieure de la paroi, dont des parties 13 et 14 sont représentées sur la figure 2, et une portion extérieure de la paroi dont une partie 15 est également représentée sur la figure 2. La portion intérieure de la paroi est configurée pour être au contact de la langue d'un utilisateur de la pièce de brossage 1. La portion extérieure de la paroi fait face à la portion intérieure de la paroi, en étant séparée de celle-ci par une distance variable selon la partie considérée de la paroi. La pente des parties 13 de la portion intérieure de paroi de la gouttière 2, lesdites parties étant situées aux extrémités de chaque branche du U formé par la pièce de brossage, est moins forte que la pente des parties correspondantes de la portion extérieure de paroi de la gouttière 2, afin de laisser une liberté plus grande pour le positionnement de la langue, et ainsi éviter un réflexe nauséeux chez certaines personnes.

Comme illustré sur la figure 2 également, une autre portion 14 de la paroi intérieure de la gouttière 2 peut être abaissée lorsque la pièce de brossage est destinée à être utilisé sur l'arcade supérieure, afin d'éviter que la pièce ne s'appuie sur le palais qui est une zone sensible.

Comme illustré sur la figure 2 également, une portion 15 de la paroi extérieure de la gouttière 2 peut être épaissie afin de s'assurer que les poils viennent toucher la 1ere prémolaire. La mâchoire humaine a globalement la forme d'un U, mais juste après la canine, c'est-à-dire au niveau de la première prémolaire, il y a généralement un décalage. Cet épaississement de la paroi permet de palier cet écart et de s'assurer ainsi que toutes les dents sont bien brossées. Ainsi, la distance entre la portion intérieure de la paroi et la portion extérieure de la paroi est variable de manière à assurer un contact des poils sur toutes les dents.

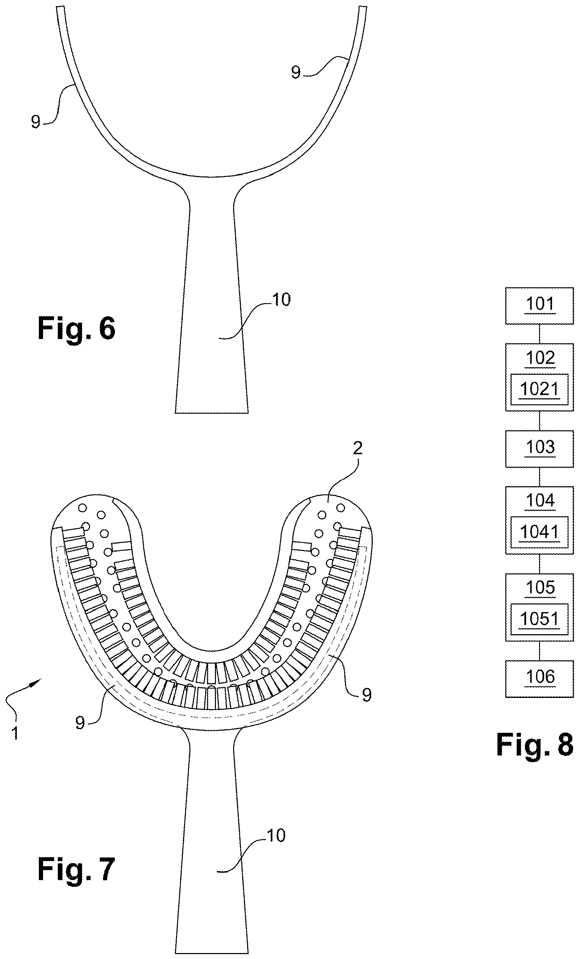

Selon un mode de réalisation illustré sur les figures 6 et 7, la pièce de brossage 1 peut comprendre un connecteur 10 sur une extrémité duquel est fixée au moins une branche 9, ladite branche 9 étant configurée pour transmettre à la pièce de brossage 1 des vibrations générées par un manche de préhension vibrant branché sur une autre extrémité du connecteur 10. Grâce à ces dispositions, la pièce de brossage peut être actionnée par un moyen autonome pour assurer un brossage efficace de la dentition d'une personne dépendante et en perte d'autonomie.

Selon un autre aspect, l'invention concerne un procédé 100 de fabrication de la pièce de brossage 1. Un mode de réalisation du procédé 100 selon l'invention va maintenant être décrit en référence à la figure 8 qui est une représentation schématique des étapes dudit procédé 100.

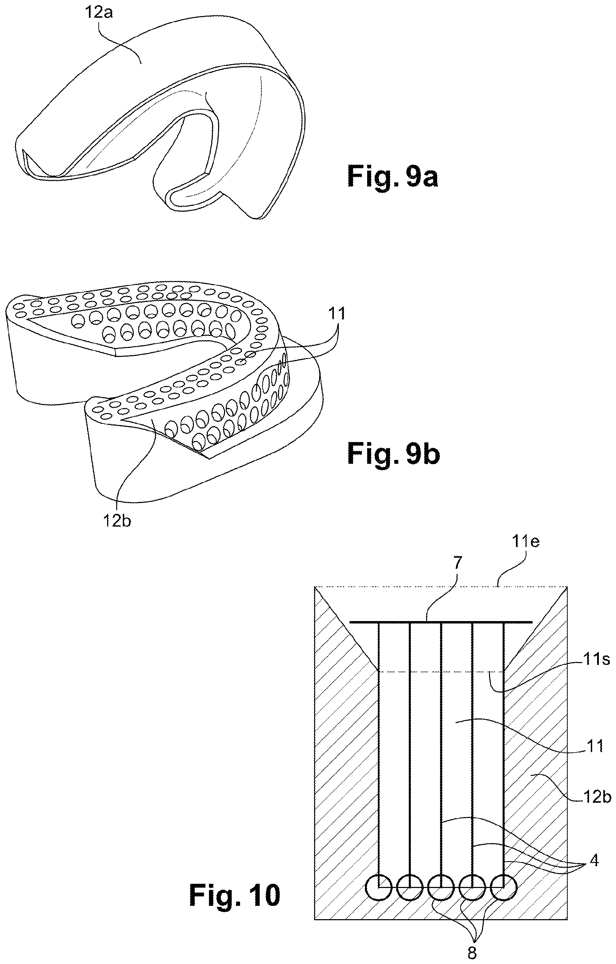

Selon un mode de réalisation le procédé 100 de fabrication d'une pièce de brossage 1 comprend les étapes suivantes, la chronologie de mise en oeuvre desdites étapes n'étant pas déterminée par l'ordre de citation desdites étapes :
- Former 101 au moins une touffe 3 de poils 4, en assemblant une pluralité de poils 4 par une extrémité 5, de manière à former une base de la touffe 3;
- Fusionner 102 les extrémités 5 formant la base de la touffe 3 de manière à former une zone fusionnée 7constituée d'un seul tenant dans le matériau des poils 4, en nylon ou en soie animale ou polybutylene terephtalate (PBT) par exemple; à l'issue de cette étape 102, une extension de la zone fusionnée 7 selon une direction transversale D1 à une direction d'extension D2 de la touffe 3 est supérieure à une extension de la base selon la direction transversale D1, donc à l'épaisseur de la base de la touffe 3 avant l'étape 102 de fusionnement ; la touffe 3 ressemble alors à un champignon renversé, comme illustré sur la figure 4, avec une zone fusionnée 7 plus étendue en épaisseur que le reste de la touffe 3, qui correspond ainsi à la tige dudit champignon, tandis que la zone fusionnée 7 a pris la forme de la tête dudit champignon. L'étape 102 de fusionnement des extrémités 5 formant la base de la touffe 3 peut par exemple comprendre une sous-étape de chauffage 1021 des extrémités 5 jusqu'à une température de fusion de ces extrémités 5.
- Mettre en forme 103 les extrémités libres 8 des poils de la pluralité de poils 4 de la touffe 3, de manière à leur conférer par exemple une forme arrondie ou une forme en aiguille.
- mettre en place 104 les touffes 3 ainsi préparées, sur un moule 12b de surmoulage de la pièce de brossage 1.
   Selon un mode de réalisation, le moule de surmoulage comprend deux parties 12a, 12b comme cela est illustré aux figures 9a et 9b, et, sur l'une des parties 12b, au moins un trou 11 formé à l'intérieur de la face inférieure du moule qui servira à mouler l'intérieur de la gouttière 2 ; de préférence, cette face du moule comprend autant de trous 11 que de touffes 3 qui doivent être fixées en saillie à l'intérieur de la gouttière 2 ; comme cela est illustré à la figure 10, ledit trou 11 comprend une ouverture d'entrée en forme d'entonnoir, dont le diamètre intérieur se réduit progressivement entre une section d'entrée 11e et une section de sortie 11s dont le diamètre est moins large que celui de la section d'entrée 11e; l'étape 104 de mise en place de chaque touffe 3 sur le moule 12b comprend une sous-étape 1041 d'insertion de la touffe 3 dans le trou 11 en commençant par l'extrémité libre 8 des poils de la touffe 3, l'extrémité 8 étant celle opposée à la zone fusionnée 7 de la touffe 3, en pénétrant dans le trou 11 par la section d'entrée 11e, jusqu'à ce que l'extrémité 8, après avoir traversé l'ouverture d'entré11e du trou 11,soit en butée sur le fond du trou 11sur la face du moule 12b. Grâce à ces dispositions, l'ouverture d'entrée, en forme d'entonnoir, du trou 11 facilite l'insertion de l'extrémité de la touffe en guidant l'extrémité libre 8 des poils 4.
- surmouler 105 la gouttière 2 et l'au moins une touffe 3. L'étape 105 de surmoulage peut comprendre une sous-étape 1051 d'injection d'un matériau plastique souple à l'intérieur du moule 12a, 12b, formé par les deux parties 12a, 12b du moule posées l'une sur l'autre de manière à former un moule fermé, et de sorte que la zone fusionnée 7 de l'au moins une touffe 3 est à l'intérieur du moule fermé ; après l'injection du matériau plastique à l'intérieur du moule fermé, la zone fusionnée 7 se trouve à l'intérieur de la paroi de la gouttière 2surmoulée et prise dans le matériau plastique souple formant la paroi de la gouttière 2, et de sorte que l'autre extrémité 8 de l'au moins une touffe 3 opposée à la zone fusionnée 7 fait saillie à l'intérieur de la gouttière 2 formée à l'étape 105 de surmoulage.
   Selon un aspect de l'invention, l'étape 104 de mise en place des touffes 3 rend étanche la section de sortie 11s de l'ouverture d'entrée du trou 11 du moule, de sorte que le matériau plastique souple injecté au cours de l'étape 105 de surmoulage pour former la paroi de la gouttière 2 de la pièce de brossage 1 n'atteint pas la partie de la touffe 3 qui est dans le trou 11 au-delà de la section de sortie 11s de l'ouverture d'entrée du trou 11, et qui font saillie à l'intérieur de la gouttière 2 formée à l'étape 105 de surmoulage.

Grâce à ces dispositions, la préparation des touffes 3 étant réalisée comme indiqué, avant le surmoulage 105, il est possible de former les touffes 3 avec des poils 4 ultrafins, courts, dont l'extrémité libre 8 est formée selon la demande, arrondie ou en forme d'aiguille, et qui peuvent être fixés, avec des inclinaisons variables, sur la paroi de la gouttière 2 d'une pièce de brossage 1 en matériau souple, ladite paroi pouvant être fine et de géométrie complexe.

Selon un mode de réalisation, les extrémités libres des poils de la touffe de poils sont dans un plan transverse à la direction d'extension de la touffe de poils, comme illustré sur la figure 3 et sur certaines touffes représentées sur les figures 1 ou 2.

Selon un mode de réalisation, les extrémités libres des poils de la touffe de poils sont dans un plan qui n'est pas transverse à la direction d'extension de la touffe de poils, comme illustré sur certaines touffes représentées sur les figures 1 ou 2.

Selon un mode de réalisation, l'étape 102 de fusionnement est réalisée avant l'étape 104 de mise en place.

Selon un mode de réalisation, l'étape 103 de mise en forme est réalisée avant l'étape 104 de mise en place.

En outre, le choix d'un matériau plastique souple pour le surmoulage 105 de la paroi de la gouttière 2, compatible chimiquement avec le matériau des poils 4, et de la zone fusionnée 7 de la touffe 3, permet d'assurer une meilleure adhésion de ces deux matériaux entre eux et un très bon maintien des touffes 3 dans la paroi de la gouttière 2 de la pièce de brossage 1.

Selon un mode de réalisation, l'étape 105 de surmoulage est précédée d'une étape de positionnement 106 contre le moule de la pièce de brossage d'au moins une branche 9 fixée à une extrémité d'un connecteur 10, ladite branche 9 étant configurée pour être à l'intérieur de la paroi de la gouttière 2 et prise dans le matériau de la gouttière 2 après l'étape 105 de surmoulage, et pour transmettre à la pièce de brossage 1 les vibrations générées par un manche de préhension vibrant branché sur une autre extrémité du connecteur 10.

Selon un mode de réalisation, ladite branche 9 est positionnée à l'intérieur de la paroi du fond de la gouttière (ce mode de réalisation n'est pas représenté sur les figures) ou à l'intérieur de la paroi latérale de la gouttière, comme illustrée sur la figure 7.

Grâce à ces dispositions, la pièce de brossage 1 obtenue avec le procédé selon l'invention peut être actionnée par un moyen autonome pour assurer un brossage efficace de la dentition d'une personne dépendante et en perte d'autonomie.

Selon un aspect de l'invention, elle concerne également un pack comprenant :
- une pièce de brossage tel que précédemment décrite, équipée d'un connecteur,
- un manche de préhension configuré pour être branché sur le connecteur,
- un socle de rangement du manche configuré pour recharger une alimentation électrique du manche.

## Revendications

1. Procédé (100) de fabrication d'une pièce de brossage (1), la pièce de brossage (1) étant configurée en forme de U pour être placée sur la dentition d'une mâchoire d'un utilisateur, la pièce de brossage (1) formant intérieurement une gouttière (2) destinée à recevoir la totalité ou une partie de cette dentition, la pièce de brossage (1) comprenant au moins une touffe (3) de poils (4) de brossage faisant saillie à l'intérieur de cette gouttière (2) par une extrémité libre (8) des poils (4) de l'au moins une touffe (3), le procédé (100) comprenant les étapes suivantes :
- former (101) l'au moins une touffe (3) de poils (4), en assemblant une pluralité de poils (4) par une extrémité (5) opposée à l'extrémité libre (8), de manière à former une base de l'au moins une touffe (3);
- fusionner (102) les extrémités (5) formant la base de l'au moins une touffe (3) de manière à former une zone fusionnée (7) d'un seul tenant, de sorte qu'une extension de la zone fusionnée (7) selon une direction transversale (D1) à une direction d'extension (D2) de l'au moins une touffe (3) soit supérieure à une extension de la base selon la direction transversale (D1) avant l'étape (102) de fusionnement ;
- mettre en place (104) l'au moins une touffe (3) sur un moule (12a, 12b) de surmoulage de la gouttière (2) de la pièce de brossage (1) ;
- surmouler (105) la gouttière (2) et l'au moins une touffe (3) ;
dans lequel l'étape (105) de surmoulage comprend une sous-étape (1051) d'injection d'un matériau plastique souple, de sorte que la zone fusionnée (7) de l'au moins une touffe (3) est à l'intérieur , et non pas à la surface, d'une paroi de la gouttière (2) et prise dans le matériau plastique souple formant la gouttière (2), et de sorte que l'autre extrémité de l'au moins une touffe (3) opposée à la zone fusionnée (7) fait saillie à l'intérieur de la gouttière (2) formée par l'étape de surmoulage.

2. Procédé (100) selon la revendication 1, dans lequel l'étape (102) de fusionnement comprend une sous-étape (1021) de chauffage des extrémités (5) formant la base (6) de l'au moins une touffe (3).

3. Procédé (100) selon l'une des revendications précédentes, dans lequel le moule (12a, 12b) de surmoulage comprend au moins un trou (11) sur une face du moule (12a, 12b), ledit au moins un trou (11) comprenant une ouverture d'entrée dont le diamètre intérieur se réduit progressivement entre une section d'entrée (11e) et une section de sortie (11s) présentant un diamètre moindre qu'un diamètre de la section d'entrée (11e) et dans lequel l'étape (104) de mise en place comprend une sous-étape (1041) d'insertion, dans l'au moins un trou (11),de l'extrémité libre (8) des poils de l'au moins une touffe (3), en pénétrant par l'ouverture d'entrée, jusqu'à ce que l'extrémité (8), après avoir traversé la section de sortie (11s) de l'ouverture d'entrée de l'au moins un trou (11), se trouve au contact du fond de l'au moins un trou (11), la section de sortie (11s) de l'ouverture d'entrée étant alors obstruée par une portion de la touffe (3), de manière à fermer et rendre étanche la section de sortie (11s) de l'ouverture d'entrée de l'au moins un trou (11).

4. Procédé (100) selon l'une des revendications précédentes, comprenant l'étape complémentaire suivante :
- mettre en forme (103) l'extrémité libre (8) des poils de la pluralité de poils (4) de l'au moins une touffe (3);

5. Procédé selon l'une des revendications précédentes, dans lequel le matériau plastique souple injecté au cours de l'étape (105) de surmoulage est chimiquement compatible du matériau dans lequel les poils (4) sont réalisés.

6. Procédé selon l'une des revendications précédentes, dans lequel le matériau plastique souple est un matériau thermoplastique élastomère, de préférence un Styrene-Ethylene-Butylene-Styrene.

7. Procédé selon l'une des revendications précédentes, dans lequel l'étape (105) de surmoulage est précédée de l'étape suivante :
- Positionner (108) contre le moule de la pièce de brossage au moins une branche (9) située à une extrémité d'un connecteur (10), ladite au moins une branche (9) étant configurée pour être à l'intérieur d'une paroi de la gouttière (2) et prise dans le matériau de la gouttière (2) après l'étape (105) de surmoulage, et pour transmettre à la pièce de brossage (1) les vibrations générées par un manche de préhension vibrant branché sur une autre extrémité du connecteur (10).

8. Pièce de brossage (1) configurée en forme de U pour être placée sur la dentition d'une mâchoire d'un utilisateur, la pièce de brossage (1) formant intérieurement une gouttière (2) destinée à recevoir la totalité ou une partie de cette dentition, la pièce de brossage (1) comprenant au moins une touffe (3) de poils (4) de brossage faisant saillie à l'intérieur de cette gouttière (2) par une extrémité libre (8) des poils (4) de l'au moins une touffe (3),
- l'au moins une touffe (3) de poils (4), comprenant une pluralité de poils (4) assemblés par une extrémité (5), opposée à l'extrémité libre (8), de manière à former une base de l'au moins une touffe (3);
- la base de l'au moins une touffe (3) formant une zone fusionnée (7) d'un seul tenant, une extension de la zone fusionnée (7) selon une direction transversale (D1) à une direction d'extension (D2) de l'au moins une touffe (3) étant supérieure à une extension de la base selon la direction transversale (D1) avant la formation de la zone fusionnée (7);
- la zone fusionnée (7) de l'au moins une touffe (3) étant à l'intérieur , et non pas à la surface,
d'une paroi de la gouttière (2) et prise dans un matériau plastique souple formant la gouttière (2), et l'autre extrémité de l'au moins une touffe (3) opposée à la zone fusionnée (7) faisant saillie à l'intérieur de la gouttière (2) formée par la pièce de brossage (1).

9. Pièce de brossage (1) selon la revendication 8, dans laquelle les poils (4) sont en nylon ou en soie animale ou en polybutylene terephtalate.

10. Pièce de brossage (1) selon l'une des revendications 8 à 9, dans laquelle les poils (4) ont un diamètre compris entre 60 µm et 120 µm, de préférence égal à 80 µm.

11. Pièce de brossage (1) selon l'une des revendications 8 à 10, dans laquelle les poils (4) ont une longueur inférieure à 8 mm, de préférence égale à 7,5 mm.

12. Pièce de brossage (1) selon l'une des revendications 8 à 11, dans laquelle la direction d'extension (D2) de l'au moins une touffe fait un angle de 45 degrés avec une direction perpendiculaire à une face de la gouttière au point où l'au moins une touffe (3) fait saillie sur la face de la gouttière (2).

13. Pièce de brossage (1) selon l'une des revendications 8 à 12, comprenant au moins une branche (9) fixée à une extrémité d'un connecteur (10), ladite au moins une branche (9) étant configurée pour transmettre à la pièce de brossage (1) des vibrations générées par un manche de préhension vibrant branché sur une autre extrémité du connecteur (10).

14. Pack comprenant :
- une pièce de brossage (1) selon la revendication 13;
- un manche de préhension, configuré pour être branché sur le connecteur (10) de la pièce de brossage (1),
- un socle de rangement du manche de préhension, le socle de rangement étant configuré pour assurer une alimentation électrique du manche.

## Patentansprüche

1. Verfahren (100) zur Herstellung eines Zahnbürstenteils (1), wobei das Zahnbürstenteil (1) in U-Form ausgelegt ist, um auf dem Gebiss eines Kiefer eines Benutzers platziert zu werden, wobei das Zahnbürstenteil (1) innen eine Rinne (2) bildet, die zur Aufnahme der Gesamtheit oder eines Teils dieses Gebisses bestimmt ist, wobei das Zahnbürstenteil (1) mindestens ein Büschel (3) Bürstenborsten (4) umfasst, die im Inneren dieser Rinne (2) mittels eines freien Endes (8) der Borsten (4) von dem mindestens einen Büschel (3) hervorstehen, wobei das Verfahren (100) die folgenden Schritte umfasst:
- Bilden (101) von dem mindestens einen Büschel (3) aus Borsten (4) durch Verbinden einer Vielzahl von Borsten (4) an einem Ende (5) gegenüber dem freien Ende (8), um eine Basis von dem mindestens einen Büschel (3) zu bilden;
- Verschmelzen (102) der Enden (5), die die Basis von dem mindestens einen Büschel (3) bilden, um eine einteilige verschmolzene Zone (7) zu bilden, so dass eine Erstreckung der verschmolzenen Zone (7) gemäß einer transversalen Richtung (D1) in einer Erstreckungsrichtung (D2) von dem mindestens einen Büschel (3) größer als eine Erstreckung der Basis gemäß der transversalen Richtung (D1) vor dem Schritt (102) des Verschmelzens ist;
- Platzieren (104) von dem mindestens einen Büschel (3) auf einer Overmouldingform (12a, 12b) der Rinne (2) des Zahnbürstenteils (1);
- Überformen (105) der Rinne (2) und von dem mindestens einen Büschel (3);
wobei der Overmouldingschritt (105) einen Unterschritt (1051) des Einspritzens eines elastischen Kunststoffmaterials umfasst, so dass die verschmolzene Zone (7) von dem mindestens einen Büschel (3) im Inneren und nicht an der Oberfläche einer Wand der Rinne (2) und in das elastische Kunststoffmaterial, das die Rinne (2) bildet, eingeschlossen ist, und derart, dass das andere Ende von dem mindestens einen Büschel (3) gegenüber der verschmolzenen Zone (7) im Inneren der Rinne (2) hervorsteht, die durch den Overmouldingschritt gebildet wurde.

2. Verfahren (100) nach Anspruch 1, wobei der Verschmelzungsschritt (102) einen Unterschritt (1021) des Erwärmens der Enden (5) umfasst, die die Basis (6) von dem mindestens einen Büschel (3) bilden.

3. Verfahren (100) nach einem der vorangehenden Ansprüche, wobei die Overmouldingform (12a, 12b) mindestens ein Loch (11) auf einer Seite der Form (12a, 12b) umfasst, wobei das mindestens eine Loch (11) eine Eingangsöffnung umfasst, deren Innendurchmesser sich schrittweise zwischen einem Eingangsquerschnitt (11e) und einem Ausgangsquerschnitt (11s) reduziert, der einen kleineren Durchmesser als ein Durchmesser des Eingangsquerschnitts (11e) aufweist und wobei der Schritt (104) des Platzierens einen Unterschritt (1041) des Einsetzens, in das mindestens eine Loch (11), des freien Endes (8) der Borsten von dem mindestens einen Büschel (3) durch Eindringen durch die Eingangsöffnung umfasst, bis das Ende (8), nach dem Durchqueren des Ausgangsquerschnitts (11s) der Eingangsöffnung des mindestens einen Lochs (11), im Kontakt mit dem Boden des mindestens einen Lochs (11) ist, wobei der Ausgangsquerschnitt (11s) der Eingangsöffnung dann von einem Abschnitt des Büschels (3) verstopft ist, so dass der Ausgangsquerschnitt (11s) der Eingangsöffnung des mindestens einen Lochs (11) verschlossen ist und abgedichtet wird.

4. Verfahren (100) nach einem der vorangehenden Ansprüche, umfassend den folgenden komplementären Schritt:
- Formen (103) des freien Endes (8) der Borsten der Vielzahl von Borsten (4) von dem mindestens einen Büschel (3).

5. Verfahren nach einem der vorangehenden Ansprüche, wobei das während des Overmouldingschritts (105) eingespritzte elastische Kunststoffmaterial mit dem Material chemisch kompatibel ist, aus dem die Borsten (4) hergestellt sind.

6. Verfahren nach einem der vorangehenden Ansprüche, wobei das elastische Kunststoffmaterial ein thermoplastisches Elastomermaterial, vorzugsweise ein Styrol-Ethylen-Butylen-Styrol, ist.

7. Verfahren nach einem der vorangehenden Ansprüche, wobei dem Overmouldingschritt (105) der folgende Schritt vorangeht:
- Positionieren (108) an der Form des Zahnbürstenteils mindestens eines Schenkels (9), der sich an einem Ende eines Verbinders (10) befindet, wobei der mindestens eine Schenkel (9) dazu ausgelegt ist, im Inneren einer Wand der Rinne (2) zu sein und im Material der Rinne (2) nach dem Overmouldingschritt (105) eingeschlossen zu sein und um auf das Zahnbürstenteil (1) die von einem vibrierenden Griff erzeugten Vibrationen zu übertragen, der an einem anderen Ende des Verbinders (10) angeschlossen ist.

8. Zahnbürstenteil (1), das in U-Form ausgelegt ist, um auf dem Gebiss eines Kiefer eines Benutzers platziert zu werden, wobei das Zahnbürstenteil (1) innen eine Rinne (2) bildet, die zur Aufnahme der Gesamtheit oder eines Teils dieses Gebisses bestimmt ist, wobei das Zahnbürstenteil (1) mindestens ein Büschel (3) Bürstenborsten (4) umfasst, die im Inneren dieser Rinne (2) mittels eines freien Endes (8) der Borsten (4) von dem mindestens einen Büschel (3) hervorstehen,
- wobei das mindestens eine Büschel (3) von Borsten (4) eine Vielzahl von Borsten (4) umfasst, die an einem Ende (5) gegenüber dem freien Ende (8) verbunden sind, um eine Basis von dem mindestens einen Büschel (3) zu bilden;
- wobei die Basis von dem mindestens einen Büschel (3) eine einteilige verschmolzene Zone (7) bildet, so dass eine Erstreckung der verschmolzenen Zone (7) gemäß einer transversalen Richtung (D1) in einer Erstreckungsrichtung (D2) von dem mindestens einen Büschel (3) größer als eine Erstreckung der Basis gemäß der transversalen Richtung (D1) vor dem Bilden der verschmolzenen Zone (7) ist;
- wobei die verschmolzene Zone (7) von dem mindestens einen Büschel (3) im Inneren und nicht an der Oberfläche einer Wand der Rinne (2) und in das elastische Kunststoffmaterial, das die Rinne (2) bildet, eingeschlossen ist, und das andere Ende von dem mindestens einen Büschel (3) gegenüber der verschmolzenen Zone (7) im Inneren der Rinne (2) hervorsteht, die von dem Zahnbürstenteil (1) gebildet wird.

9. Zahnbürstenteil (1) nach Anspruch 8, wobei die Borsten (4) aus Nylon oder aus tierischer Seide oder aus Polybutylenterephtalat sind.

10. Zahnbürstenteil (1) nach einem der Ansprüche 8 bis 9, wobei die Borsten (4) einen Durchmesser zwischen 60 µm und 120 µm, vorzugsweise von gleich 80 µm, haben.

11. Zahnbürstenteil (1) nach einem der Ansprüche 8 bis 10, wobei die Borsten (4) eine Länge unter 8 mm, vorzugsweise von gleich 7,5 mm, haben.

12. Zahnbürstenteil (1) nach einem der Ansprüche 8 bis 11, wobei die Erstreckungsrichtung (D2) von dem mindestens einen Büschel einen Winkel von 45 Grad mit einer Richtung senkrecht zu einer Seite der Rinne am Punkt, wo das mindestens einen Büschel (3) auf der Fläche der Rinne (2) hervorsteht, bildet.

13. Zahnbürstenteil (1) nach einem der Ansprüche 8 bis 12, umfassend mindestens einen Schenkel (9), der an einem Ende eines Verbinders (10) befestigt ist, wobei der mindestens eine Schenkel (9) dazu ausgelegt ist, auf das Zahnbürstenteil (1) die von einem vibrierenden Griff erzeugten Vibrationen zu übertragen, der an einem anderen Ende des Verbinders (10) angeschlossen ist.

14. Pack, umfassend:
- ein Zahnbürstenteil (1) nach Anspruch 13;
- einen Griff, der zum Anschluss an den Verbinder (10) des Zahnbürstenteils (1) ausgelegt ist,
- einen Aufbewahrungssockel des Griffs, wobei der Aufbewahrungssockel zur Sicherung einer elektrischen Versorgung des Griffs ausgelegt ist.

## Claims

1. A method (100) for manufacturing a brushing part (1), the brushing part (1) being configured in a U shape to be placed on the dentition of a jaw of a user, the brushing part (1) internally forming a gutter (2) intended to receive all or part of this dentition, the brushing part (1) comprising at least one tuft (3) of brushing bristles (4) projecting inside this gutter (2) through a free end (8) of the bristles (4) of the at least one tuft (3), the method (100) comprising the following steps:
- forming (101) the at least one tuft (3) of bristles (4), by assembling a plurality of bristles (4) by one end (5) opposite the free end (8), so as to form a base of the at least one tuft (3);
- fusing (102) the ends (5) forming the base of the at least one tuft (3) so as to form a fused area (7) in one piece, so that an extension of the fused area (7) in a transverse direction (D1) to a direction of extension (D2) of the at least one tuft (3) is greater than an extension of the base in the transverse direction (D1) before the fusing step (102);
- placing (104) the at least one tuft (3) on a mold (12a, 12b) for overmolding the gutter (2) of the brushing part (1);
- overmolding (105) the gutter (2) and the at least one tuft (3);
wherein the overmolding step (105) comprises a sub-step (1051) of injecting a flexible plastic material, so that the fused area (7) of the at least one tuft (3) is in the interior, and not at the surface, of a wall of the gutter (2) and taken in the flexible plastic material forming the gutter (2), and so that the other end of the at least one tuft (3) opposite the fused area (7) projects inside the gutter (2) formed by the overmolding step.

2. The method (100) according to claim 1, wherein the fusing step (102) comprises a sub-step (1021) of heating the ends (5) forming the base (6) of the at least one tuft (3).

3. The method (100) according to any of the preceding claims, wherein the overmolding mold (12a, 12b) comprises at least one hole (11) on one face of the mold (12a, 12b), said at least one hole (11) comprising an inlet opening whose internal diameter gradually reduces between an inlet section (11e) and an outlet section (11s) having a diameter less than a diameter of the inlet section (11e) and wherein the placing step (104) comprises a sub-step (1041) of inserting, into the at least one hole (11), the free end (8) of the bristles of the at least one tuft (3), penetrating through the inlet opening, until the end (8), after passing through the outlet section (11s) of the inlet opening of the at least one hole (11), is in contact with the bottom of the at least one hole (11), the outlet section (11s) of the inlet opening then being obstructed by a portion of the tuft (3), so as to close and seal the outlet section (11s) of the inlet opening of the at least one hole (11).

4. The method (100) according to any of the preceding claims, comprising the following complementary step:
- shaping (103) the free end (8) of the bristles of the plurality of bristles (4) of the at least one tuft (3);

5. The method according to any of the preceding claims, wherein the flexible plastic material injected during the overmolding step (105) is chemically compatible with the material from which the bristles (4) are made.

6. The method according to any of the preceding claims, wherein the flexible plastic material is an elastomeric thermoplastic material, preferably a Styrene-Ethylene-Butylene-Styrene.

7. The method according to any of the preceding claims, wherein the overmolding step (105) is preceded by the following step:
- positioning (108) against the mold of the brushing part at least one branch (9) located at one end of a connector (10), said at least one branch (9) being configured to be inside a wall of the gutter (2) and taken into the material of the gutter (2) after the overmolding step (105), and to transmit to the brushing part (1) the vibrations generated by a vibrating gripping handle plugged to another end of the connector (10).

8. A brushing part (1) configured in a U shape to be placed on the dentition of a jaw of a user, the brushing part (1) internally forming a gutter (2) intended to receive all or part of this dentition, the brushing part (1) comprising at least one tuft (3) of brushing bristles (4) projecting inside this gutter (2) through a free end (8) of the bristles (4) of the at least one tuft (3),
- the at least one tuft (3) of bristles (4), comprising a plurality of bristles (4) assembled by one end (5), opposite the free end (8), so as to form a base of the at least one tuft (3);
- the base of the at least one tuft (3) forming a fused area (7) in one piece, an extension of the fused area (7) in a transverse direction (D1) to a direction of extension (D2) of the at least one tuft (3) being greater than an extension of the base in the transverse direction (D1) before the formation of the fused area (7);
- the fused area (7) of the at least one tuft (3) being in the interior, and not at the surface, of a wall of the gutter (2) and taken in a flexible plastic material forming the gutter (2), and the other end of the at least one tuft (3) opposite the fused area (7) projecting inside the gutter (2) formed by the brushing part (1).

9. The brushing part (1) according to claim 8, wherein the bristles (4) are made of nylon or animal silk or polybutylene terephthalate.

10. The brushing part (1) according to any of claims 8 and 9, wherein the bristles (4) have a diameter comprised between 60 µm and 120 µm, preferably equal to 80 µm.

11. The brushing part (1) according to any of claims 8 to 10, wherein the bristles (4) have a length less than 8 mm, preferably equal to 7.5 mm.

12. The brushing part (1) according to any of claims 8 to 11, wherein the direction of extension (D2) of the at least one tuft makes an angle of 45 degrees with a direction perpendicular to one face of the gutter at the point where the at least one tuft (3) projects onto the face of the gutter (2).

13. The brushing part (1) according to any of claims 8 to 12, comprising at least one branch (9) fastened to one end of a connector (10), said at least one branch (9) being configured to transmit to the brushing part (1) vibrations generated by a vibrating gripping handle plugged to another end of the connector (10).

14. A pack comprising:
- a brushing part (1) according to claim 13;
- a gripping handle, configured to be plugged to the connector (10) of the brushing part (1),
- a storage base for the gripping handle, the storage base being configured to provide electrical power to the handle.
